# EUROPEAN PATENT SPECIFICATION

(11) **EP 4 099 048 B1**
(45) Date of publication and mention of the grant of the patent: **22.10.2025**
(21) Application number: 22176261.0
(22) Date of filing: 31.05.2022
(51) Int. Cl.: G01S 7/48, G01S 17/931, G01S 5/16, G01C 21/36

(54) **POSITION INFORMATION CALCULATION DEVICE AND POSITION INFORMATION CALCULATION METHOD**
POSITIONSINFORMATIONSBERECHNUNGSVORRICHTUNG UND POSITIONSINFORMATIONSBERECHNUNGSVERFAHREN
DISPOSITIF DE CALCUL D'INFORMATIONS DE POSITION ET PROCÉDÉ DE CALCUL D'INFORMATIONS DE POSITION

(30) Priority: 04.06.2021 JP 2021094099
(43) Date of publication of application: 07.12.2022
(73) Proprietor: Kabushiki Kaisha Toshiba, Minato-ku Tokyo (JP)
(72) Inventor: MASHIMA, Yoshiki, Kanagawa (JP); KOBAYASHI, Hiroyuki, Kanagawa (JP); OODAKE, Tatsuya, Kanagawa (JP); TAKAHASHI, Yusuke, Kanagawa (JP); KATO, Noriyasu, Kanagawa (JP); HATTORI, Yohei, Kanagawa (JP); ITO, Hiroaki, Kanagawa (JP)
(74) Representative: AWA Sweden AB

(56) References cited:
- FR-A1- 3 036 498
- US-A1- 2013 155 222
- US-A1- 2018 045 519

## Description

### FIELD

Embodiments described herein relate generally to a position information calculation device and a position information calculation method.

### BACKGROUND

Conventionally, it has been demanded to detect the position (hereinafter, referred to as "self-position") of a moving object with high accuracy for automatic driving and automatic traveling of the moving object such as a railway vehicle, an automobile, and a robot.

As a technique for accurately detecting the self-position, for example, there is a technique of measuring the position using a global navigation satellite system (GNSS) without installing ground equipment requiring maintenance. In addition, in an environment where GNSS information cannot be acquired, such as a tunnel or an underground, a technique of detecting the self-position by obtaining a movement distance on the basis of a wheel diameter, a wheel rotation rate, and the like has been proposed. In addition, there has also been proposed a technique of estimating the self-position by collating an image obtained by imaging the front, rear, or periphery of a traveling vehicle with an imaging unit mounted on the vehicle with a reference image associated with position information.

However, in the conventional arts, for example, in a case where GNSS and autonomous navigation are used in combination to narrow down an enormous number of reference images, a highly accurate position measurement technique is essential. In addition, with the technique of detecting the self-position by obtaining the movement distance on the basis of the wheel diameter, the wheel rotation rate, and the like, there is a problem that an error increases at the time of the wheel idling. In addition, with the technique using the reference image associated with the position information, there is a problem that it may be difficult to calculate the position information of the vehicle traveling at a high speed without delay because many reference images are required. FR3036498 A1 relates to a location method and system for a motor vehicle. US 2013/155222 A1 relates to an apparatus and method for recognizing location of a vehicle. And US 2018/045519 A1 relates to a system and method for precision localization and mapping.

Therefore, the present invention has been made in view of the above circumstances, and an object is to provide a position information calculation device and a position information calculation method capable of calculating the position of a moving object quickly and with high accuracy without using a measurement technique such as GNSS.

### BRIEF DESCRIPTION OF THE DRAWINGS

FIG. 1 is a diagram illustrating an example of a schematic configuration block diagram of a railway position information calculation device according to a first embodiment;
FIG. 2 is a diagram illustrating an example of a functional configuration block diagram of the railway position information calculation device according to the first embodiment;
FIG. 3 is a flowchart illustrating an example of a flow of processing of the railway position information calculation device according to the first embodiment;
FIG. 4 is an explanatory diagram of an example of processing of detecting equipment, which is a detection target, from sensor information of the railway position information calculation device according to the first embodiment;
FIG. 5 is a diagram illustrating an example of an equipment dictionary section of the railway position information calculation device according to the first embodiment;
FIG. 6 is an explanatory diagram of an example of processing of searching for position information of each extraction region from the equipment dictionary section of the railway position information calculation device according to the first embodiment;
FIG. 7 is an explanatory diagram of an example of distance information of the railway position information calculation device according to the first embodiment;
FIG. 8 is a diagram illustrating an example of a flow of processing of a railway position information calculation device according to a modification of the first embodiment; and
FIG. 9 is a diagram illustrating an example of a functional configuration block diagram of a railway position information calculation device according to a second embodiment.

### DETAILED DESCRIPTION

According to one embodiment, in general, a position information calculation device includes a sensor information acquisition module, a landmark detection module, a landmark dictionary section, a landmark search module, and a moving object position calculation module. The sensor information acquisition module is configured to acquire sensor information obtained by sensing an external environment of a moving object with a sensor. The landmark detection module is configured to detect a predetermined landmark set in advance from the sensor information to acquire first sensor landmark information. The landmark dictionary section is configured to store in advance second sensor landmark information in which the landmark and position information are associated with each other. The landmark search module is configured to acquire the position information associated with the landmark in the first sensor landmark information by search using the landmark dictionary section. The moving object position calculation module is configured to calculate a position of the moving object on a basis of the position information of the landmark.

Hereinafter, embodiments of the position information calculation device and the position information calculation method of the present invention will be described with reference to the drawings. Note that, in the drawings attached to the present specification, for convenience of illustration and ease of understanding, scales, vertical and horizontal dimensional ratios, and the like may be appropriately changed and exaggerated from actual ones. In addition, when there is an arrow indicating the flow of information in the drawings, the arrow indicates a main flow of information, and the information may flow in a portion without the arrow.

In addition, in the embodiments described below, a railway vehicle is taken as an example of the moving object, but it is not limited thereto. The present invention can also be applied to other moving objects such as automobiles and robots. In addition, as a landmark for calculating the position of the moving object, a railway facility and equipment are taken as an example, but it is not limited thereto. As the landmark, those other than a railroad facility and equipment such as a mountain or an overpass may be employed.

### (First Embodiment)

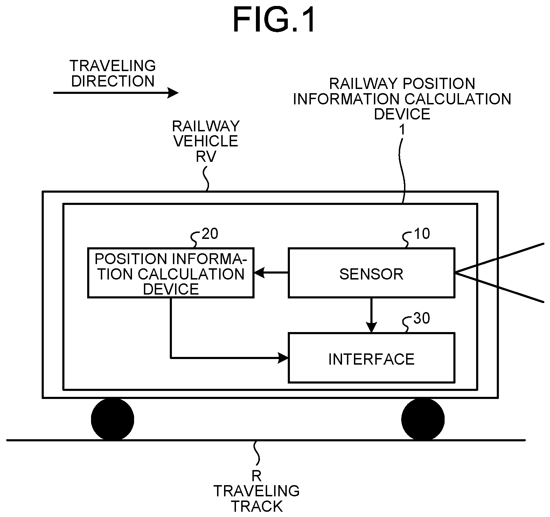

FIG. 1 is a schematic configuration block diagram of a railway position information calculation device 1 of the first embodiment. The railway position information calculation device 1 mounted on a railway vehicle RV (hereinafter, also simply referred to as a "vehicle") includes a sensor 10, a position information calculation device 20, and an interface 30.

The sensor 10 is an example of a sensor device that senses the vehicle external environment in the traveling direction or the reverse direction of the railway vehicle RV traveling on a traveling track R. The position information calculation device 20 calculates the self-position of the vehicle on the basis of the sensor information of the vehicle external environment acquired by sensing by the sensor 10 and distance information. The interface 30 outputs the self-position of the vehicle calculated by the position information calculation device 20 to the outside.

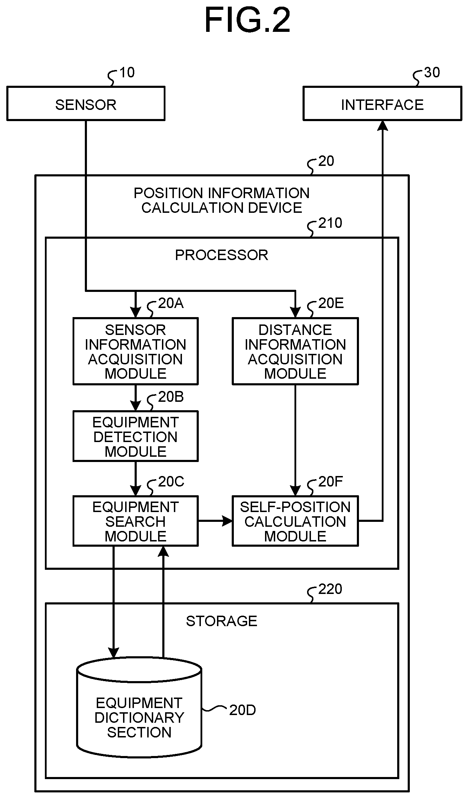

FIG. 2 is a functional configuration block diagram of the railway position information calculation device 1 of the first embodiment. The position information calculation device 20 includes a processor 210 and a storage 220. The processor 210 executes various types of information processing. The processor 210 includes, as functional configurations, a sensor information acquisition module 20A, an equipment detection module 20B (landmark detection module), an equipment search module 20C (landmark search module), a distance information acquisition module 20E, and a self-position calculation module 20F. The storage 220 includes, for example, an equipment dictionary section 20D (landmark dictionary section).

The sensor information acquisition module 20A acquires sensor information obtained by sensing the external environment of the railway vehicle RV with the sensor 10. For example, the sensor information acquisition module 20A acquires sensor information obtained by sensing the traveling direction or reverse direction of the railway vehicle RV with the sensor.

The equipment detection module 20B detects preset predetermined equipment and acquires sensor equipment information (first sensor landmark information) D1 and/or D2 from the sensor information.

The equipment search module 20C acquires the position information associated with the equipment in the sensor equipment information by the search using the equipment dictionary section 20D. For example, the equipment search module 20C acquires the position information associated with equipment most similar to the equipment in the sensor equipment information by the search using the equipment dictionary section 20D.

In addition, for example, when acquiring the position information associated with the equipment in the sensor equipment information by the search using the equipment dictionary section 20D, the equipment search module 20C sets a range in which the distance from the railway vehicle RV is constant in the sensor information as a detection target candidate using the distance information.

In addition, for example. When acquiring the position information associated with the equipment in the sensor equipment information by the search using the equipment dictionary section 20D, the equipment search module 20C sets the sensor information having the position information within a predetermined range as a search target from the position information at the time one time before the current time.

The distance information acquisition module 20E acquires the distance information of the external environment in the sensor information. That is, the distance information acquisition module 20E acquires the distance information from the vehicle to the equipment included in the information obtained by sensing with the sensor 10. In addition, for example, the distance information acquisition module 20E acquires distance information obtained by sensing the same range as the sensor information with the sensor.

The self-position calculation module 20F calculates the position of the railway vehicle RV on the basis of the position information of the equipment. For example, the self-position calculation module 20F calculates the self-position of the vehicle from the position information of the equipment and the information of the distance to the equipment. In addition, for example, the self-position calculation module 20F calculates the position of the railway vehicle RV using the position information of the equipment and the distance from the railway vehicle RV to the equipment calculated using the distance information.

The interface 30 is an example of a device that outputs the self-position of the vehicle. Here, in order to visually discriminate the self-position of the vehicle, various types of information may be displayed using a part or all of the sensor information of the sensor information acquisition module 20A and the distance information of the distance information acquisition module 20E in combination.

Some or all of the units 20A, 20B, 20C, 20E, and 20F are realized, for example, by a processor such as a central processor (CPU) included in the railway vehicle RV executing software stored in a storage device included in the railway vehicle RV.

In addition, some or all of the units 20A, 20B, 20C, 20E, and 20F may be realized by hardware that is a circuit board such as a large scale integration (LSI), an application specific integrated circuit (ASIC), a field programmable gate array (FPGA), or the like. Alternatively, they may be realized by cooperation of software executed by the processor and hardware.

The storage 220 includes a nonvolatile storage medium such as read only memory (ROM), flash memory, a solid state drive (SSD), a hard disk drive (HDD), or an SD card, and a volatile storage medium such as random access memory (RAM) or a register. Then, the storage 220 stores various types of information such as a program executed by the processor included in the railway vehicle RV.

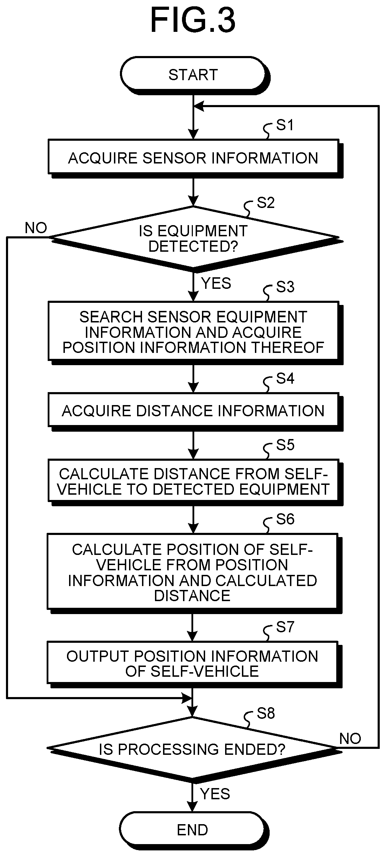

Next, an example of a flow of processing of the railway position information calculation device 1 in the first embodiment will be described with reference to FIG. 3. FIG. 3 is a flowchart illustrating an example of a flow of processing of the railway position information calculation device 1 in the first embodiment.

In Step S1, the sensor information acquisition module 20A acquires the sensor information obtained by sensing with the sensor 10. Examples of the sensor information acquired include a visible light image (RGB (Red, Green, Blue) image, grayscale image, or the like) and distance information. The visible light image is acquired from, for example, a monocular camera, a compound eye camera in which monocular cameras are combined, or a stereo camera. In addition, the distance information is acquired from a compound eye camera, a stereo camera, a laser sensor that measures a light receiving position and a time when light is returned by projecting a laser beam to acquire the position information of an object, light detection and ranging (LiDAR), or the like.

In addition, a machine learning method such as ensemble learning or a support vector machine (SVM) for acquiring distance information using a visible light image as an input, a deep learning method using a deep neural network (DNN), a graph neural network (GNN), a generative adversarial network (GAN), a recurrent neural network (RNN), or metric learning, a reinforcement learning method, a combination method thereof, or the like may be used.

The visible light image is acquired with a predetermined resolution (video graphics array (VGA), high definition (HD), full HD, 2k, 4k, or the like), and a value expressed by a predetermined bit color (8-bit color, 24-bit color, 48-bit color, or the like) is stored for each pixel. When a visible light image is acquired using a compound eye camera, a visible light image acquired from one camera may be used, or a visible light image obtained by combining images of both cameras may be used.

The distance information may be acquired from a distance image having a resolution similar to that of the visible light image, or a value converted into a unit of a predetermined length (cm, m, km, or the like) may be used as a unit representing the distance. In the distance information using a device that projects a laser beam to measure the distance, there is a case where some pixels cannot be acquired depending on the projection position. In this case, the pixel may be acquired using information of obtained peripheral pixels. For example, an average value, a median value, or the like of peripheral pixels may be used as a substitute pixel. In the first embodiment, the description will be given on the premise of an RGB image photographed and synthesized by the compound eye camera and a distance image having the same resolution as the RGB image acquired by the compound eye camera.

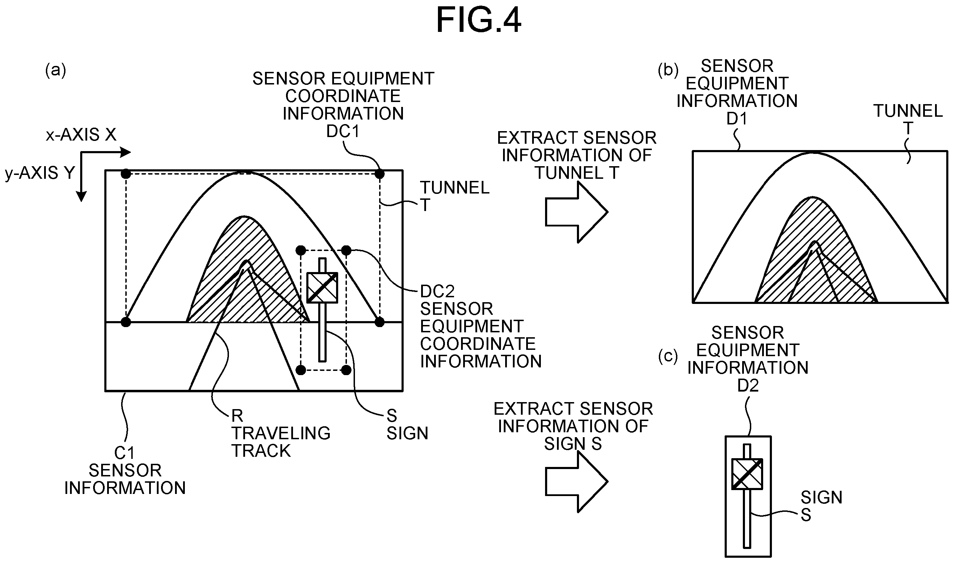

Next, in Step S2, the equipment detection module 20B attempts to detect the equipment, which is a detection target, from the sensor information acquired in Step S1, and when the equipment cannot be detected (No), the processing proceeds to Step S8. When the equipment is detected (Yes), the processing proceeds to Step S3. FIGS. 4(a) to 4(c) are explanatory diagrams of an example of processing of finding equipment, which is a detection target, from acquired sensor information C1 and extracting sensor information of the target equipment. Here, the finding refers to processing of acquiring coordinate information of the range or region of the target equipment on a multidimensional plane and the name of the equipment by using the sensor information as an input. In addition, the extraction refers to processing of acquiring sensor information of a range of the target equipment on the basis of the acquired coordinate information. Furthermore, the detection refers to processing of performing extraction processing after the finding processing.

In addition, the sensor information C1 is information obtained by sensing the vehicle external environment in the traveling direction or the reverse direction of the railway vehicle RV. Here, since the RGB image is taken as an example, the dimension of the sensor information is two-dimensional, and the sensor information is two-dimensional plane information. As a detection target, a tunnel T and a sign S are set as an example, and these pieces of target equipment are found using an algorithm provided in the sensor information acquisition module 20A.

Pieces of sensor equipment coordinate information DC1 and DC2 are coordinate information of the tunnel T and the sign S acquired according to the coordinate axes (here, x axis X and y axis Y) of the minimum unit (here, pixel) constituting the sensor information. The format of the acquired coordinate information depends on coordinate axes, and for example, when the coordinate information is found using a rectangle on a two-dimensional plane, an x coordinate and a y coordinate of the upper left position of the rectangle and an x coordinate and a y coordinate of the lower right position of the rectangle are acquired as the sensor equipment information.

In addition, instead of the coordinates of the lower right position of the rectangle, a length h of the vertical width and a length w of the horizontal width from each coordinate of the upper left position of the rectangle may be acquired. In addition, in the case of finding using a region using a polygon on a two-dimensional plane, an x coordinate and a y coordinate may be acquired for each point constituting the polygon. In addition, as an algorithm of finding a rectangle or a region, a machine learning method such as ensemble learning or SVM, a deep learning method utilizing DNN, GNN, GAN, RNN, or metric learning, a reinforcement learning method, a combination method thereof, or the like may be used. Here, the result of acquisition using a rectangle is indicated as an example.

Note that, in a case where equipment included in the detection target is detected, only one of the plurality of detected results may be input to a subsequent stage, or all the detection results may be input. In that case, for example, when the reliability of detection is obtained in the range of 0% to 100% at the time of using DNN or the like, it is sufficient if equipment for inputting a result to a subsequent stage is selected according to thresholds or comparisons on the basis of the reliability.

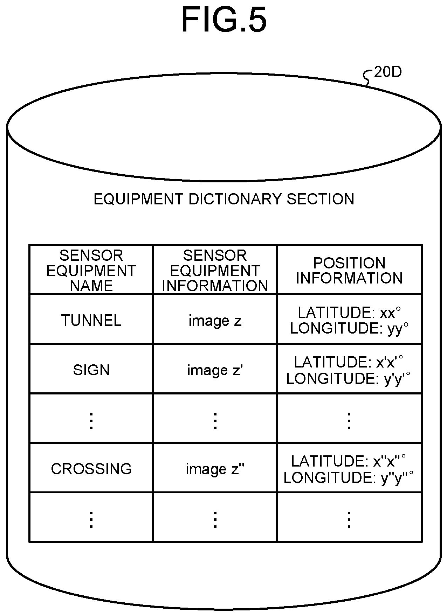

In Step S3, the equipment search module 20C acquires the position information of the sensor equipment information acquired in Step S2 from dictionary data in which the sensor equipment information and the position information are associated with each other. FIG. 5 is a diagram illustrating an example of dictionary data (second sensor landmark information) in the equipment dictionary section 20D. The equipment dictionary section 20D stores sensor equipment information and position information associated therewith.

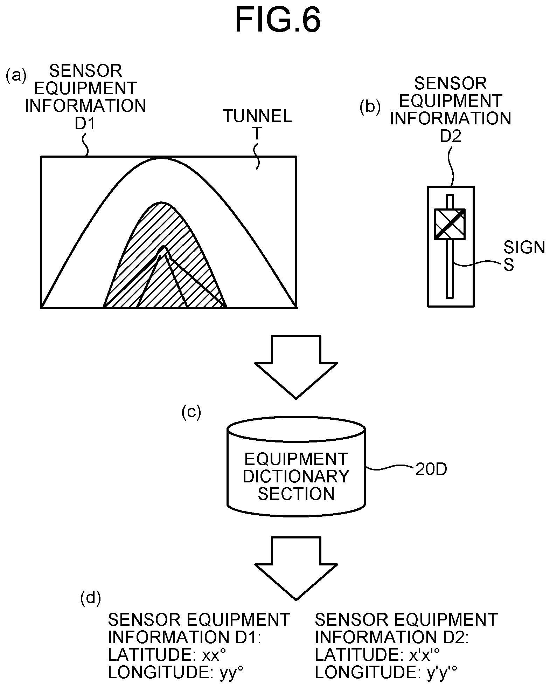

FIGS. 6(a) to 6(c) are explanatory diagrams illustrating an example of search processing of acquiring the position information of the sensor equipment information using the acquired sensor equipment information D1 and/or D2 as an input using the dictionary data in the equipment dictionary section 20D. Here, the sensor equipment information to be searched may be a part of one piece of extracted sensor equipment information or may be some of a plurality of pieces of extracted sensor equipment information. In addition, the position information for each extraction region obtained as a search result may be latitude information and longitude information, or may be kilometer information.

As the dictionary data stored in the equipment dictionary section 20D, a relational database, an object relational database, a document-oriented database, a graph-oriented database, or the like may be used, a deep learning method or the like utilizing DNN or GNN may be used for the search processing, or a method of feature point matching between pieces of sensor equipment information may be used. For example, the sensor equipment information stored in the dictionary data may be compressed and stored in a high dimension using a deep learning method utilizing DNN or GNN. In addition, a scale in a specific distance space such as Euclidean distance, Mahalanobis distance, graph distance, cosine similarity, or the like may be used by using a deep learning method utilizing DNN or GNN in the case of comparison with the input sensor equipment information.

When the search is performed using the dictionary data stored in the equipment dictionary section 20D, all the data included in the dictionary data may be set as the search target, or the search target may be limited to the sensor equipment information having the position information according to a predetermined criterion. For example, when dictionary data having latitude information and longitude information as position information is used and the current time is t = 1, sensor equipment information having position information within a latitude of 0.xx and a longitude of 0.yy from the position information at t = 0, which is the time one time before, is set as the search range. In addition, when dictionary data having kilometer information as position information is used and similarly the current time is t = 1, sensor equipment information having position information within zz km from the position information at t = 0, which is the time one time before, is set as the search range. At this time, when the position information cannot be obtained as the search result, the search range may be expanded by enlarging the reference range.

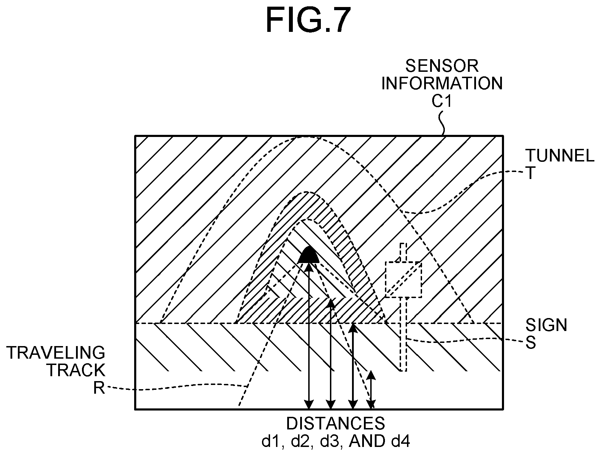

Returning to FIG. 3, in Step S4, the distance information acquisition module 20E acquires the distance information obtained by sensing with the sensor 10. FIG. 7 is a diagram illustrating an example of distance information acquired from the sensor 10. Here, the distance from the self-vehicle is longer toward the depth of a tunnel, and the distance from the self-vehicle is shorter toward the portion farther away from the depth of the tunnel. Note that the display may be such that the distance from the self-vehicle is longer in black and the distance from the self-vehicle is shorter in white. In addition, the distinction of distance is indicated in four stages of distances d1 to d4, indicating that the distance d1 is a region farthest from the self-vehicle and indicating that the distance d4 is a region closest to the self-vehicle. In addition, the entrance and exit of the tunnel T and the sign S in the drawing are installed vertically, and thus indicate that the distance from the self-vehicle is constant (including almost constant) .

Returning to FIG. 3, in Step S5, the self-position calculation module 20F calculates the distance from the self-vehicle to the found equipment using the distance information acquired in Step S4. For example, in a case where the visible light image and the distance information include images having the same resolution, the same coordinate position as the coordinate position of the found sensor equipment information is acquired from the distance information, and the distance from the self-vehicle to the equipment is calculated using a representative value such as an average value, a median value, or a mode value of distance values within the range.

In Step S6, the self-position calculation module 20F calculates the position information of the self-vehicle using the position information of the sensor equipment information acquired in Step S3 and the distance from the self-vehicle to the sensor equipment information calculated in Step S5. When the position information is latitude information and longitude information, the distance from the self-vehicle to the sensor equipment information is converted into latitude information and longitude information, and four arithmetic operations are performed. When the position information is the kilometer information, the position of the railway vehicle RV is set as the initial position to the kilometer of the vehicle stop position in advance during stop at the starting station of a line. After departure from the starting station, the movement distance is added to the kilometer of the vehicle stop position to calculate the vehicle position. For example, the information as to which station the vehicle stops may be acquired by an input operation by an operator, or may be specified on the basis of time information by acquiring the train number of the railway vehicle RV and the operation schedule. In view of the above, the distance from the self-vehicle to the sensor equipment information is converted into kilometer, and four arithmetic operations are performed.

In Step S7, the position information of the self-vehicle calculated in Step S6 is output to the interface 30, which is an external device. At this time, the sensor information, the sensor equipment information, and the distance information may be stored in advance, and a part or all of the sensor information, the sensor equipment information, and the distance information may be output to the interface 30 together with the position information of the self-vehicle.

In Step S8, the processor 210 determines whether or not the end of the processing of calculating the position information of the self-vehicle has been instructed. In a case where the end of the processing has been instructed (Step S8: Yes), acquisition of new sensor information is not performed, and the processing ends. On the other hand, in a case where continuation of the processing has been instructed (Step S8: No), the processing returns to Step S1, and new sensor information is acquired.

As described above, with the railway vehicle RV in the first embodiment, the position of the moving object can be calculated quickly and with high accuracy without using a measurement technique such as GNSS. Specifically, the position information of the found sensor equipment information is acquired from the dictionary data using the sensor information obtained by sensing the traveling direction or the reverse direction of the railway vehicle RV, and the self-position of the self-vehicle can be calculated by using the position information together with the information of the distance to the equipment.

In addition, by the method of using the reference image associated with the position information according to the conventional technique, there are many reference images, and there is a problem that it may be difficult to calculate without delay the position information of the vehicle traveling at a high speed. On the other hand, with the method of the present embodiment, by detecting equipment or the like, processing can be done lightly, and high-speed and highly accurate self-position calculation can be realized.

### (First modification of the first embodiment)

In the first embodiment above, the position information of the found sensor equipment information is acquired from the dictionary data using the sensor information obtained by sensing the traveling direction or the reverse direction of the railway vehicle RV, and the self-position of the self-vehicle is calculated by using the position information together with the information of the distance to the equipment. Then, when the sensor equipment information is found from the visible light image, the acquired sensor information is input as it is, and in the first modification, the distance information is acquired in advance, and the detection range is narrowed down on the basis of the information, whereby the calculation efficiency can be improved.

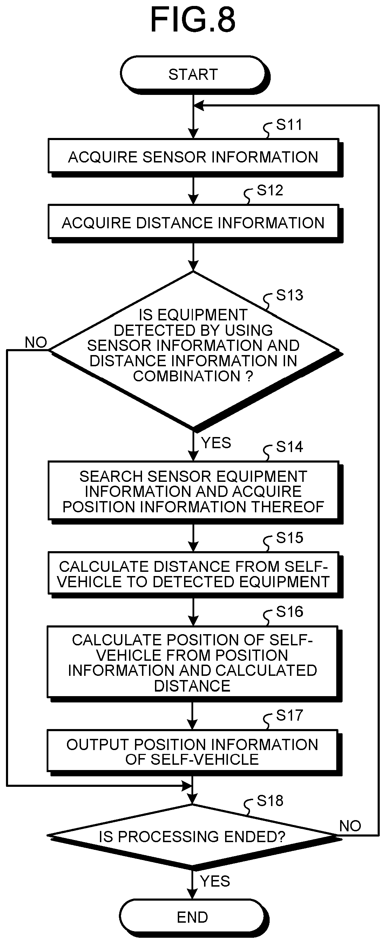

FIG. 8 illustrates a flowchart of a case where a detection range is narrowed down when target equipment is detected from sensor information. Step S11 is similar to Step S1 in FIG. 3.

Next, in Step S12, the distance information acquisition module 20E acquires the distance information obtained by sensing with the sensor 10.

Next, in Step S13, the equipment detection module 20B attempts to detect the equipment, which is a detection target by using the sensor information acquired in Step S11 and the distance information acquired in Step S12 in combination, and when the equipment cannot be detected (No), the processing proceeds to Step S18. When the equipment is detected (Yes), the processing proceeds to Step S14.

In a case where the sensor information and the distance information are images having the same resolution, the distance value of the coordinate range of the equipment expressed in the distance information is constant, and thus the detection range of the sensor information is limited using the coordinate range. Thus, the detection range in the sensor information can be narrowed down by the distance information.

In addition, the distance information obtained by narrowing the coordinate range may be used as an algorithm of detecting the target equipment from the sensor information.

Steps S14 to S18 are similar to Steps S3 and S5 to S8 in FIG. 3.

### (Second modification of the first embodiment)

The self-position calculation module 20F may calculate the self-position on the basis of the position information of the equipment acquired by the equipment search module 20C and an artificial intelligence (AI) learning model for self-position calculation created in advance using the reference image without using the distance information described above.

According to this, as compared with the method of calculating the self-position on the basis of the AI learning model without using the position information of the equipment, the processing is significantly lighter, and a highly accurate processing result can be obtained.

### (Second Embodiment)

Next, a second embodiment will be described. The second embodiment is an example in which a position measurement module 20G is further provided in a position information calculation device 20 included in a railway position information calculation device 1, and the self-position is calculated with higher accuracy by using the position measurement technique in combination. In the following description, description of the same matters as those of the first embodiment will be appropriately omitted.

As a background, there is a case where it is desired to identify the self-position with higher accuracy depending on a vehicle on which the device is mounted. For example, in the case of automatic driving of a vehicle such as a railway vehicle or an automobile in which the highest priority is placed on safety, it is necessary to always monitor the self-position of the traveling vehicle with high accuracy. In the second embodiment, an example will be described in which the accuracy of the self-position of the vehicle is further improved by further including the position measurement module 20G in the position information calculation device 20.

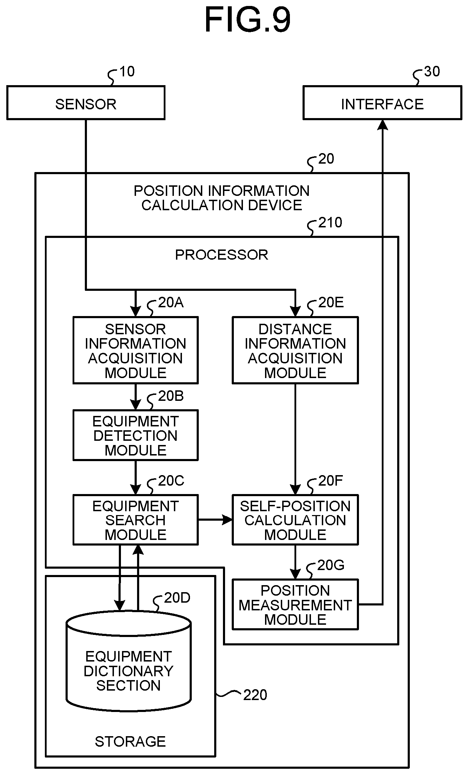

FIG. 9 is a diagram illustrating an example of a functional configuration block diagram of the railway position information calculation device 1 (FIG. 1) in the second embodiment. As illustrated in FIG. 9, in the second embodiment, a railway vehicle RV includes a sensor 10, a position information calculation device 20, and an interface 30, and the position measurement module 20G that measures the traveling position of the railway vehicle RV is further provided in the position information calculation device 20. Here, as the position measurement module 20G, a position measurement technique such as a tacho-generator (TG) or a satellite position measurement system (GNSS) is used.

That is, the position measurement module 20G measures the position of the railway vehicle RV on the basis of a predetermined position measurement technique. Then, the self-position calculation module 20F calculates the position of the railway vehicle RV by performing predetermined four arithmetic operations using the position information of the equipment and the position information obtained by the position measurement module 20G. Hereinafter, a specific description will be given.

A plurality of pieces of position information of the vehicle can be acquired by the self-position calculation module 20F and the position measurement module 20G in FIG. 9. In the second embodiment, the position information of the vehicle is calculated with higher accuracy by combining the respective pieces of position information by four arithmetic operations or the like. In the four arithmetic operations, for example, an average value or a median value may be calculated, and position information equal to or more than a predetermined criterion may be rejected. In that case, a predetermined criterion is set in advance. As the predetermined criterion, for example, a case is assumed where the position information of the vehicle at the time one time before the current time is latitude xx° and longitude yy°, the position information by the self-position calculation module 20F at the current time is latitude xx + 20° and longitude yy + 20°, and the position information by the position measurement module 20G is latitude xx + 1° and longitude yy + 1°. In addition, the predetermined criterion is that an error between the position information at the current time and the position information at the time one time before is within a latitude of 5° and a longitude of 5°. At this time, the position information by the self-position calculation module 20F is rejected as significantly deviating from the predetermined criterion, and the position information by the position measurement module 20G is set as the position information to be output to the interface 30.

The accuracy of the speed or acceleration acquired in combination by the position measurement module 20G greatly depends on the acquisition environment. Therefore, the acceleration or speed may be calculated on the basis of the self-position calculated at the time two times before, the self-position calculated at the time one time before, and each time acquired from the sensor information C1, and the calculated acceleration or speed may be used as a correction value when the self-position at the current time is calculated. For example, it is assumed that t = 0, latitude x0°, and longitude y0° represent the time two times before and the position information of the traveling vehicle, t = 1, latitude x1°, and longitude y1'° represent the time one time before and the position information, and t = 2 represents the current time. At this time, movement time t' and movement distance d are obtained from the time two times before, the time one time before, and the position information of each time, and speed v or acceleration a is calculated therefrom so as to be used as a value for correcting the speed or the acceleration of the position measurement module 20G at the current time t = 2. The use as the correction value may be used every time the self-position is calculated, or whether to use the correction value may be determined on the basis of a predetermined criterion. In addition, a speed, an acceleration, or both calculated using four arithmetic operations such as an average value and a median value may be used.

### (Modification of the second embodiment)

In addition, for example, the self-position calculation module 20F may correct the distance information acquired from the distance information acquisition module 20E by calculating the distance from the railway vehicle RV to the equipment on the basis of the position information of the equipment and the position information obtained by the position measurement module 20G. Hereinafter, a specific description will be given.

In the second embodiment described above, the position measurement module 20G is further provided in the position information calculation device 20, and the position information with higher accuracy is calculated by using the position measurement technique in combination. On the other hand, the distance information acquired from the distance information acquisition module 20E can be corrected using the position information of the sensor equipment information included in the sensor information acquired from the equipment search module 20C and the position information acquired from the position measurement module 20G. For example, the distance information from the self-vehicle to the detected equipment is calculated by performing four arithmetic operations on the position information acquired from the equipment search module 20C and the position information acquired from the position measurement module 20G. By using this distance information, the distance information acquired from the distance information acquisition module 20E can be corrected.

In addition, in order to determine the stop state of the self-vehicle, the speed, acceleration, or position information of the position measurement technique may be used. In this case, since the speed, the acceleration, or the position information is continuously measured during a certain time and it is determined whether the self-vehicle is stopped on the basis of a predetermined criterion, it is required to perform measurement with high accuracy even when the self-vehicle is stopped. Therefore, the stop state of the self-vehicle is determined by using the speed, acceleration, or position information of the self-vehicle during a certain time described in the first embodiment and the second embodiment. At this time, it may be used as a correction value of the speed, acceleration, or position information of the position measurement technique for performing the stop determination, or may be determined by performing four arithmetic operations with the self-position of the self-vehicle during a certain time.

As described above, with the technique of each embodiment, it is possible to calculate the position information of the self-vehicle without using the position measurement technique such as GNSS in combination. In addition, since the self-position can be calculated in a complex manner by using the position measurement technique in combination, the position information of the self-vehicle can be calculated with higher accuracy. Furthermore, it is also possible to correct the speed, acceleration, or position information that is an output value used inside the position measurement technique, or use as a fail-safe (when there are two or more position calculation methods, even if one fails, the rest can respond).

Note that the program executed in the present embodiments is provided by being incorporated in advance in ROM or the like, but may be configured to be provided by being recorded in a computer-readable recording medium such as a CD-ROM, a flexible disk (FD), a CD-R, or a digital versatile disk (DVD) as a file in an installable format or an executable format. In addition, the program executed in the present embodiments may be configured to be stored on a computer connected to a network such as the Internet and provided by being downloaded via the network. Furthermore, the program executed in the present embodiments may be configured to be provided or distributed via a network such as the Internet.

While certain embodiments have been described, these embodiments have been presented by way of example only, and are not intended to limit the scope of the inventions. Indeed, the novel methods and systems described herein may be embodied in a variety of other forms.

## Claims

1. A position information calculation device (20) comprising:
a sensor information acquisition module (20A) configured to acquire sensor information obtained by sensing an external environment of a moving object (RV) with a sensor;
a landmark detection module (20B) configured to detect a predetermined landmark set in advance from the sensor information to acquire first sensor landmark information;
a landmark dictionary section (20D) configured to store in advance second sensor landmark information in which the landmark and position information are associated with each other;
a landmark search module (20C) configured to acquire the position information associated with the landmark in the first sensor landmark information by search using the landmark dictionary section;
a moving object position calculation module (20F) configured to calculate a position of the moving object (RV) on the basis of the position information of the landmark; and
a distance information acquisition module (20E) configured to acquire distance information of the external environment in the sensor information, wherein
the moving object position calculation module (20F) is configured to calculate the position of the moving object (RV) on the basis of the position information of the landmark and the distance information, and
the landmark search module (20C) is configured to set a range in which a distance from the moving object (RV) to an object in the range is constant in the sensor information as a detection target candidate by using the distance information when acquiring the position information associated with the landmark in the first sensor landmark information by search using the landmark dictionary section (20D).

2. The position information calculation device (20) according to claim 1, wherein the moving object position calculation module (20F) is configured to calculate the position of the moving object (RV) by using the position information of the landmark and a distance from the moving object to the landmark calculated using the distance information.

3. The position information calculation device (20) according to claim 1, wherein
the sensor information acquisition module (20A) is configured to acquire the sensor information obtained by sensing a traveling direction or a reverse direction of the moving object (RV) with the sensor, and
the distance information acquisition module (20E) is configured to acquire the distance information obtained by sensing a same range as the sensor information with the sensor.

4. The position information calculation device (20) according to claim 1, wherein the landmark search module (20C) is configured to acquire the position information associated with a landmark most similar to the landmark in the first sensor landmark information by search using the landmark dictionary section (20D).

5. The position information calculation device (20) according to claim 1, wherein the landmark search module (20C) is configured to set, as a search target, the sensor information having position information within a predetermined range from position information at a time one time before a current time, among search times, when acquiring the position information associated with the landmark in the first sensor landmark information by search using the landmark dictionary section (20D).

6. The position information calculation device (20) according to claim 1, further comprising:
a position measurement module (20G) configured to measure the position of the moving object (RV) on a basis of a predetermined position measurement technique, wherein
the moving object position calculation module (20F) is configured to calculate the position of the moving object (RV) by performing a predetermined arithmetic operation by using the position information of the landmark and position information obtained by the position measurement module (20G).

7. The position information calculation device (20) according to claim 6, wherein the moving object position calculation module (20F) is configured to correct the distance information acquired from the distance information acquisition module (20E) by calculating a distance from the moving object (RV) to the landmark on a basis of the position information of the landmark and the position information obtained by the position measurement module (20G).

8. A position information calculation method comprising:
acquiring, by means of a sensor information acquisition module (20A), sensor information obtained by sensing an external environment of a moving object (RV) with a sensor;
detecting, by means of a landmark detection module (20B), a predetermined landmark set in advance from the sensor information to acquire first sensor landmark information;
acquiring, by means of a landmark search module (20C), position information associated with the landmark in the first sensor landmark information by search using a landmark dictionary section (20D) configured to store in advance second sensor landmark information in which the landmark and the position information are associated with each other; and
calculating a position of the moving object (RV) on the basis of the position information of the landmark, acquiring, by means of a distance information acquisition module (20E), distance information of the external environment in the sensor information, and calculating, by means of a moving object position calculation module (20F), the position of the moving object (RV) on the basis of the position information of the landmark and the distance information, setting, by means of the landmark search module (20C), a range in which a distance from the moving object (RV) is constant in the sensor information as a detection target candidate by using the distance information when acquiring the position information associated with the landmark in the first sensor landmark information by search using the landmark dictionary section (20D).

## Patentansprüche

1. Positionsinformationsberechnungsvorrichtung (20), umfassend:
ein Sensorinformationserfassungsmodul (20A), das dazu ausgestaltet ist, Sensorinformationen zu erfassen, die durch Abtasten einer äußeren Umgebung eines sich bewegenden Objekts (RV) mit einem Sensor erhalten werden;
ein Landmarken-Detektionsmodul (20B), das dazu ausgestaltet ist, eine vorbestimmte Landmarke, die im Voraus eingestellt wird, von den Sensorinformationen zu detektieren, um erste Sensorlandmarkeninformationen zu erfassen;
eine Landmarken-Verzeichniseinheit (20D), die dazu ausgestaltet ist, im Voraus zweite Sensorlandmarkeninformationen zu speichern, in denen die Landmarke und Positionsinformationen miteinander verknüpft sind;
ein Landmarken-Suchmodul (20C), das dazu ausgestaltet ist, die Positionsinformationen, die mit der Landmarke in den ersten Sensorlandmarkeninformationen verknüpft sind, durch Suche unter Verwendung der Landmarken-Verzeichniseinheit zu erfassen;
ein Sich-bewegendes-Objekt-Positionsberechnungsmodul (20F), das dazu ausgestaltet ist, eine Position des sich bewegenden Objekts (RV) auf der Grundlage der Positionsinformationen der Landmarke zu berechnen; und
ein Distanzinformationserfassungsmodul (20E), das dazu ausgestaltet ist, Distanzinformationen der äußeren Umgebung in den Sensorinformationen zu erfassen, wobei
das Sich-bewegende-Objekt-Positionsberechnungsmodul (20F) dazu ausgestaltet ist, die Position des sich bewegenden Objekts (RV) auf der Grundlage der Positionsinformationen der Landmarke und der Distanzinformationen zu berechnen, und
das Landmarken-Suchmodul (20C), dazu ausgestaltet ist, beim Erfassen der Positionsinformationen, die mit der Landmarke in den ersten Sensorlandmarkeninformationen verknüpft sind, durch Suche unter Verwendung der Landmarken-Verzeichniseinheit (20D) einen Bereich, in dem eine Distanz von dem sich bewegenden Objekt (RV) zu einem Objekt in dem Bereich in den Sensorinformationen konstant ist, als einen Detektionszielkandidaten unter Verwendung der Distanzinformationen einzustellen.

2. Positionsinformationsberechnungsvorrichtung (20) nach Anspruch 1, wobei das Sich-bewegende-Objekt-Positionsberechnungsmodul (20F) dazu ausgestaltet ist, die Position des sich bewegenden Objekts (RV) unter Verwendung der Positionsinformationen der Landmarke und einer Distanz von dem sich bewegenden Objekt zu der Landmarke zu berechnen, die unter Verwendung der Distanzinformationen berechnet wurde.

3. Positionsinformationsberechnungsvorrichtung (20) nach Anspruch 1, wobei
das Sensorinformationserfassungsmodul (20A) dazu ausgestaltet ist, die Sensorinformationen zu erfassen, die durch Abtasten einer Fahrtrichtung oder einer umgekehrten Richtung des sich bewegenden Objekts (RV) mit dem Sensor erhalten werden, und
das Distanzinformationserfassungsmodul (20E) dazu ausgestaltet ist, die Distanzinformationen zu erfassen, die durch Abtasten eines gleichen Bereichs wie die Sensorinformationen mit dem Sensor erhalten werden.

4. Positionsinformationsberechnungsvorrichtung (20) nach Anspruch 1, wobei das Landmarken-Suchmodul (20C) dazu ausgestaltet ist, die Positionsinformationen, die mit einer Landmarke verknüpft sind, die der Landmarke in den ersten Sensorlandmarkeninformationen am ähnlichsten ist, durch Suche unter Verwendung der Landmarken-Verzeichniseinheit (20D) zu erfassen.

5. Positionsinformationsberechnungsvorrichtung (20) nach Anspruch 1, wobei das Landmarken-Suchmodul (20C) dazu ausgestaltet ist, beim Erfassen der Positionsinformationen, die mit der Landmarke in den ersten Sensorlandmarkeninformationen verknüpft sind, durch Suche unter Verwendung der Landmarken-Verzeichniseinheit (20D), als ein Suchziel die Sensorinformationen, die Positionsinformationen innerhalb eines vorbestimmten Bereichs von Positionsinformationen aufweisen, an einem Mal vor einem gegenwärtigen Mal unter Suchmalen einzustellen.

6. Positionsinformationsberechnungsvorrichtung (20) nach Anspruch 1, ferner umfassend:
ein Positionsmessungsmodul (20G), das dazu ausgestaltet ist, die Position des sich bewegenden Objekts (RV) auf einer Grundlage einer vorbestimmten Positionsmessungstechnik zu messen, wobei
das Sich-bewegende-Objekt-Positionsberechnungsmodul (20F) dazu ausgestaltet ist, die Position des sich bewegenden Objekts (RV) durch Durchführen einer vorbestimmten arithmetischen Operation unter Verwendung der Positionsinformationen der Landmarke und von Positionsinformationen zu berechnen, die durch das Positionsmessungsmodul (20G) erhalten werden.

7. Positionsinformationsberechnungsvorrichtung (20) nach Anspruch 6, wobei das Sich-bewegende-Positionsberechnungsmodul (20F) dazu ausgestaltet ist, die Distanzinformationen, die von dem Distanzinformationserfassungsmodul (20E) erfasst werden, durch Berechnen einer Distanz von dem sich bewegenden Objekt (RV) zu der Landmarke auf einer Grundlage der Positionsinformationen der Landmarke und der Positionsinformationen zu korrigieren, die durch das Positionsmessungsmodul (20G) erhalten werden.

8. Positionsinformationsberechnungsverfahren, umfassend:
Erfassen, mittels eines Sensorinformationserfassungsmoduls (20A), von Sensorinformationen, die durch Abtasten einer äußeren Umgebung eines sich bewegenden Objekts (RV) mit einem Sensor erhalten werden;
Detektieren, mittels eines Landmarken-Detektionsmoduls (20B), einer vorbestimmten Landmarke, die im Voraus eingestellt wurde, von den Sensorinformationen, um erste Sensorlandmarkeninformationen zu erfassen;
Erfassen, mittels eines Landmarken-Suchmoduls (20C), von Positionsinformationen, die mit der Landmarke in den ersten Sensorlandmarkeninformationen verknüpft sind, durch Suche unter Verwendung einer Landmarken-Verzeichniseinheit (20D), die dazu ausgestaltet ist, im Voraus zweite Sensorlandmarkeninformationen zu speichern, in denen die Landmarke und die Positionsinformationen miteinander verknüpft sind, und
Berechnen einer Position des sich bewegenden Objekts (RV) auf der Grundlage der Positionsinformationen der Landmarke, Erfassen, mittels eines Distanzinformationserfassungsmoduls (20E), von Distanzinformationen der äußeren Umgebung in den Sensorinformationen, und Berechnen, mittels eines Sich-bewegendes-Objekt-Positionsberechnungsmoduls (20F), der Position des sich bewegenden Objekts (RV) auf der Grundlage der Positionsinformationen der Landmarke und der Distanzinformationen, Einstellen, mittels des Landmarken-Suchmoduls (20C), eines Bereichs, in dem eine Distanz von dem sich bewegenden Objekt (RV) in den Sensorinformationen konstant ist, als ein Detektionszielkandidat unter Verwendung der Distanzinformationen beim Erfassen der Positionsinformationen, die mit der Landmarke in den ersten Sensorlandmarkeninformationen verknüpft sind, durch Suche unter Verwendung der Landmarken-Verzeichniseinheit (20D).

## Revendications

1. Dispositif de calcul d'informations de position (20) comprenant :
un module d'acquisition d'informations de capteur (20A) configuré pour acquérir des informations de capteur obtenues par la détection d'un environnement externe d'un objet mobile (RV) avec un capteur ;
un module de détection de repère (20B) configuré pour détecter un repère prédéterminé défini à l'avance à partir des informations de capteur pour acquérir des premières informations de repère de capteur ;
une section de dictionnaire de repère (20D) configurée pour stocker à l'avance des deuxièmes informations de repère de capteur dans lesquelles le repère et les informations de position sont associés l'un à l'autre ;
un module de recherche de repère (20C) configuré pour acquérir les informations de position associées au repère dans les premières informations de repère de capteur par une recherche à l'aide de la section de dictionnaire de repère ;
un module de calcul de position d'objet mobile (20F) configuré pour calculer une position de l'objet mobile (RV) sur la base des informations de position du repère ; et
un module d'acquisition d'informations de distance (20E) configuré pour acquérir des informations de distance de l'environnement externe dans les informations de capteur, dans lequel
le module de calcul de position d'objet mobile (20F) est configuré pour calculer la position de l'objet mobile (RV) sur la base des informations de position du repère et des informations de distance, et
le module de recherche de repère (20C) est configuré pour définir une plage dans laquelle une distance de l'objet mobile (RV) à un objet dans la plage est constante dans les informations de capteur en tant que candidat cible de détection à l'aide des informations de distance lors de l'acquisition des informations de position associées au repère dans les premières informations de repère de capteur par une recherche à l'aide de la section de dictionnaire de repère (20D).

2. Dispositif de calcul d'informations de position (20) selon la revendication 1, dans lequel le module de calcul de position d'objet mobile (20F) est configuré pour calculer la position de l'objet mobile (RV) à l'aide des informations de position du repère et d'une distance de l'objet mobile au repère calculée à l'aide des informations de distance.

3. Dispositif de calcul d'informations de position (20) selon la revendication 1, dans lequel
le module d'acquisition d'informations de capteur (20A) est configuré pour acquérir les informations de capteur obtenues par la détection d'une direction de marche avant ou d'une direction de marche arrière de l'objet mobile (RV) avec le capteur, et
le module d'acquisition d'informations de distance (20E) est configuré pour acquérir les informations de distance obtenues par la détection d'une même plage que les informations de capteur avec le capteur.

4. Dispositif de calcul d'informations de position (20) selon la revendication 1, dans lequel le module de recherche de repère (20C) est configuré pour acquérir les informations de position associées à un repère le plus similaire au repère dans les premières informations de repère de capteur par une recherche à l'aide de la section de dictionnaire de repère (20D).

5. Dispositif de calcul d'informations de position (20) selon la revendication 1, dans lequel le module de recherche de repère (20C) est configuré pour définir, en tant que cible de recherche, les informations de capteur présentant des informations de position à l'intérieur d'une plage prédéterminée à partir d'informations de position à un temps qui est un temps avant un temps actuel parmi des temps de recherche, lors de l'acquisition des informations de position associées au repère dans les premières informations de repère de capteur par une recherche à l'aide de la section de dictionnaire de repère (20D).

6. Dispositif de calcul d'informations de position (20) selon la revendication 1, comprenant en outre :
un module de mesure de position (20G) configuré pour mesurer la position de l'objet mobile (RV) sur la base d'une technique de mesure de position prédéterminée, dans lequel
le module de calcul de position d'objet mobile (20F) est configuré pour calculer la position de l'objet mobile (RV) par la réalisation d'une opération arithmétique prédéterminée à l'aide des informations de position du repère et des informations de position obtenues par le module de mesure de position (20G).

7. Dispositif de calcul d'informations de position (20) selon la revendication 6, dans lequel le module de calcul de position d'objet mobile (20F) est configuré pour corriger les informations de distance acquises à partir du module d'acquisition d'informations de distance (20E) par le calcul d'une distance de l'objet mobile (RV) au repère sur la base des informations de position du repère et des informations de position obtenues par le module de mesure de position (20G).

8. Procédé de calcul d'informations de position comprenant :
l'acquisition, au moyen d'un module d'acquisition d'informations de capteur (20A), d'informations de capteur obtenues par la détection d'un environnement externe d'un objet mobile (RV) avec un capteur ;
la détection, au moyen d'un module de détection de repère (20B), d'un repère prédéterminé défini à l'avance à partir des informations de capteur pour acquérir des premières informations de repère de capteur ;
l'acquisition, au moyen d'un module de recherche de repère (20C), d'informations de position associées au repère dans les premières informations de repère de capteur par une recherche à l'aide d'une section de dictionnaire de repère (20D) configurée pour stocker à l'avance des deuxièmes informations de repère de capteur dans lesquelles le repère et les informations de position sont associés l'un à l'autre ; et
le calcul d'une position de l'objet mobile (RV) sur la base des informations de position du repère, l'acquisition, au moyen d'un module d'acquisition d'informations de distance (20E), d'informations de distance de l'environnement externe dans les informations de capteur, et le calcul, au moyen d'un module de calcul de position d'objet mobile (20F), de la position de l'objet mobile (RV) sur la base des informations de position du repère et des informations de distance, la définition, au moyen du module de recherche de repère (20C), d'une plage dans laquelle une distance de l'objet mobile (RV) est constante dans les informations de capteur en tant que candidat cible de détection à l'aide des informations de distance lors de l'acquisition des informations de position associées au repère dans les premières informations de repère de capteur par une recherche à l'aide de la section de dictionnaire de repère (20D).
